# EUROPEAN PATENT SPECIFICATION

(11) **EP 3 464 468 B1**
(45) Date of publication and mention of the grant of the patent: **30.08.2023**
(21) Application number: 17731291.5
(22) Date of filing: 26.05.2017
(51) Int. Cl.: C08L 69/00

(54) **HIGH HEAT, HIGH IMPACT POLYCARBONATE COMPOSITIONS AND ARTICLES MADE THEREFROM**
HOCHHITZEBESTÄNDIGE HOCHSCHLAGZÄHE POLYCARBONATZUSAMMENSETZUNGEN UND DARAUS HERGESTELLTE ARTIKEL
COMPOSITIONS DE POLYCARBONATE HAUTEMENT RÉSISTANTES À LA CHALEUR, HAUTEMENT RÉSISTANTES AU CHOC ET OBJETS FABRIQUÉS À PARTIR DE CELLES-CI

(30) Priority: 26.05.2016 US 201662341967 P
(43) Date of publication of application: 10.04.2019
(73) Proprietor: SHPP Global Technologies B.V., 4612 PX Bergen op Zoom (NL)
(72) Inventor: VAN DE WETERING, Karin, 4612 PX Bergen op Zoom (NL); GRCEV, Snezana, 4612 PX Bergen op Zoom (NL)
(74) Representative: Modiano, Micaela Nadia
(86) International application number: PCT/IB2017/053118
(87) International publication number: WO 2017/203480

(56) References cited:
- WO-A1-2015/159245
- US-A1- 2013 310 498
- US-A1- 2014 234 629

## Description

### BACKGROUND

This disclosure is directed to articles comprising polycarbonate compositions, specifically polycarbonate compositions comprising a polycarbonate homopolymer, a high heat polycarbonate copolymer, a poly(carbonate-siloxane), a flame retardant salt, and glass fibers, their method of manufacture, and the polycarbonate compositions thereof.

Materials used for electrical applications require high heat resistance, high impact strength, and good flammability properties. The market is also moving towards articles having thin walls for purposes of weight and size reduction, for example. Polycarbonates have been used in the manufacture of articles and components for a wide range of applications, from automotive parts to electronic appliances. Polycarbonates generally have low heat resistance but good impact strength.

US2014234629 discloses polycarbonate blend compositions having a combination of a high heat polycarbonate, a polycarbonate polysiloxane copolymer, an anti-drip agent comprising a perfluorinated polyolefin, and a flame retardant additive.

WO2015159245 discloses metallized articles comprising polycarbonate compositions are disclosed. The compositions include at least one first polycarbonate useful for high heat applications, a second polycarbonate that is a Bisphenol A (BPA) polycarbonate-polydimethylsiloxane copolymer; and optionally a third polycarbonate.

US2013310498 discloses a composition comprising: a flame retardant comprising a sulfonate salt and three polycarbonates. The first polycarbonate has a branching level of greater than or equal to 2%, a weight average molecular weight of 20,000 g/mole to 55,000 g/mole and a peak melt viscosity of greater than or equal to 25,000 poise.

There is a need for polycarbonate compositions that have high heat resistance, good impact strength, and good flammability properties.

### SUMMARY

In a first embodiment the present invention provides an article comprising a polycarbonate composition comprising 8-55 weight percent (wt%) of a bisphenol A homopolycarbonate having a weight average molecular weight from 15,000-40,000 grams/mole measured via gel permeation chromatography using bisphenol A homopolycarbonate standards; 10-25 wt% of a poly(carbonate-siloxane); 20-50 wt% of a high heat polycarbonate copolymer having a glass transition temperature of 170°C or higher and comprising at least one of a high heat copolymer having carbonate units derived from bisphenol A and a high heat aromatic dihydroxy compound, preferably a phthalimidine carbonate unit, or a poly(phthalate ester-carbonate), preferably comprising ester units derived from bisphenol A and terephthalic, isophthalic, or phthalic acid, or a combination comprising at least one of the foregoing diacids, and carbonate units derived from bisphenol A; 0.1-0.7 wt% of a flame retardant salt; 5-15 wt% of glass fibers; 0-0.2 wt% of an anti-drip agent; optionally, up to 10 wt% of an additive composition; wherein the polycarbonate composition comprises 2-4 weight percent of siloxane, and a molded sample of the polycarbonate composition has a Vicat B120 softening temperature of at least 150°C when measured according to ISO 306, an Izod notched impact strength of greater than or equal to 10 kilojoules per square meter measured at 23°C according to ISO 180/1 A, a flame test rating, when measured according to UL-94 at 0.8 millimeters thickness, of V2, and a probability of first time pass for V2 greater than 0.7; wherein each amount is based on the total weight of the polycarbonate composition, which sums to 100 wt%.

In a second embodiment the present invention provides a polycarbonate composition, comprising
8 to 55 weight percent of a bisphenol A homopolycarbonate having a weight average molecular weight from 15,000-40,000 grams/mole measured via gel permeation chromatography using bisphenol A homopolycarbonate standards;
10-25 weight percent of a poly(carbonate-siloxane);
20-50 weight percent of a high heat polycarbonate copolymer having a glass transition temperature of 170°C or higher and comprising at least one of
   a high heat copolymer having carbonate units derived from bisphenol A and a high heat aromatic dihydroxy compound, preferably a phthalimidine carbonate unit, or
a poly(phthalate ester-carbonate), preferably comprising ester units derived from bisphenol A and terephthalic, isophthalic, or phthalic acid, or a combination comprising at least one of the foregoing diacids, and carbonate units derived from bisphenol A;
0.1-0.7 weight percent of a flame retardant salt;
5-15 weight percent of glass fibers;
0-0.2 weight percent of an anti-drip agent;
optionally, up to 10 weight percent of an additive composition,
wherein the polycarbonate composition comprises 2-4 weight percent of siloxane.

The above described and other features are exemplified by the following detailed description, examples, and claims.

### DETAILED DESCRIPTION

Provided is a polycarbonate composition having high heat resistance, high impact strength, and good flammability properties. The polycarbonate composition according to the present disclosure comprises a polycarbonate homopolymer, a high heat polycarbonate copolymer, a poly(carbonate-siloxane), a flame retardant salt, and glass fibers. The polycarbonate composition can be used to prepare articles, including thin walled articles. The polycarbonate composition provides a combination of the desired heat resistance, impact strength, and flammability properties. A molded sample of the polycarbonate composition according to the present invention has a Vicat B120 softening temperature of at least 150°C, preferably from 155-165°C when measured according to ISO 306, an Izod notched impact strength of greater than or equal to 10 kilojoules per square meter, preferably 15-25 kilojoules per square meter, measured at 23°C according to ISO 180/1 A, and a flame test rating, when measured according to UL-94 at 0.8 millimeters thickness, of V2. A molded sample of the polycarbonate composition can also have a probability of first time pass for V2 greater than 0.7, preferably greater than 0.8.

The polycarbonate composition according to the present disclosure comprises a bisphenol A homopolycarbonate. The polycarbonate composition according to the present disclosure further comprises a high heat polycarbonate copolymer having a glass transition temperature of 170°C or higher comprising carbonate units derived from bisphenol A and a high heat aromatic dihydroxy compound, preferably a phthalimidine carbonate unit, or a poly(phthalate-carbonate), preferably comprising ester units derived from bisphenol A and terephthalic, isophthalic, or phthalic acid, or a combination comprising at least one of the foregoing diacids, and carbonate units derived from bisphenol A. The polycarbonate composition according to the present disclosure further comprises a poly(carbonate-siloxane), also referred to in the art as a polycarbonate-polysiloxane copolymer.

"Polycarbonate" as used herein means a polymer or copolymer having repeating structural carbonate units of formula (1) 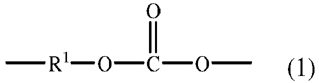 wherein at least 60 percent of the total number of R¹ groups are aromatic, or each R¹ contains at least one C₆₋₃₀ aromatic group. Specifically, each R¹ can be derived from a dihydroxy compound such as an aromatic dihydroxy compound of formula (2) or a bisphenol of formula (3). 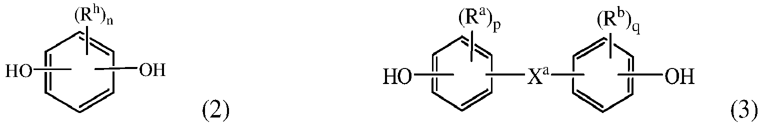 In formula (2), each R^{h} is independently a halogen atom, for example bromine, a C₁₋₁₀ hydrocarbyl group such as a C₁₋₁₀ alkyl, a halogen-substituted C₁₋₁₀ alkyl, a C₆₋₁₀ aryl, or a halogen-substituted C₆₋₁₀ aryl, and n is 0-4.

In formula (3), R^{a} and R^{b} are each independently a halogen, C₁₋₁₂ alkoxy, or C₁₋₁₂ alkyl, and p and q are each independently integers of 0-4, such that when p or q is less than 4, the valence of each carbon of the ring is filled by hydrogen. In an embodiment, p and q is each 0, or p and q is each 1, and R^{a} and R^{b} are each a C₁₋₃ alkyl group, specifically methyl, disposed meta to the hydroxy group on each arylene group. X^{a} is a bridging group connecting the two hydroxy-substituted aromatic groups, where the bridging group and the hydroxy substituent of each C₆ arylene group are disposed ortho, meta, or para (specifically para) to each other on the C₆ arylene group, for example, a single bond, -O-, -S-, -S(O)-, -S(O)₂-, -C(O)-, or a C₁₋₁₈ organic group, which can be cyclic or acyclic, aromatic or non-aromatic, and can further comprise heteroatoms such as halogens, oxygen, nitrogen, sulfur, silicon, or phosphorous. For example, X^{a} can be a substituted or unsubstituted C₃₋₁₈ cycloalkylidene; a C₁₋₂₅ alkylidene of the formula - C(R^{c})(R^{d}) - wherein R^{c} and R^{d} are each independently hydrogen, C₁₋₁₂ alkyl, C₁₋₁₂ cycloalkyl, C₇₋₁₂ arylalkyl, C₁₋₁₂ heteroalkyl, or cyclic C₇₋₁₂ heteroarylalkyl; or a group of the formula - C(=R^{e})- wherein R^{e} is a divalent C₁₋₁₂ hydrocarbon group.

Examples of bisphenol compounds include 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha,alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorene, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole; resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like.

Specific dihydroxy compounds include resorcinol, 2,2-bis(4-hydroxyphenyl) propane ("bisphenol A" or "BPA"), 3,3-bis(4-hydroxyphenyl) phthalimidine, 2-phenyl-3,3'-bis(4-hydroxyphenyl) phthalimidine (also known as N-phenyl phenolphthalein bisphenol, "PPPBP", or 3,3-bis(4-hydroxyphenyl)-2-phenylisoindolin-1-one), 1,1-bis(4-hydroxy-3-methylphenyl)cyclohexane, and 1,1-bis(4-hydroxyphenyl)-3,3,5-trimethylcyclohexane (isophorone bisphenol).

The polycarbonate homopolymers, according to the present disclosure, can have an intrinsic viscosity, as determined in chloroform at 25°C, of 0.3-1.5 deciliters per gram (dl/gm), specifically 0.45-1.0 dl/gm. The polycarbonates, according to the present disclosure, can have a weight average molecular weight of 10,000-50,000 grams per mole (g/mol), specifically 20,000-40,000 g/mol, as measured by gel permeation chromatography (GPC), using a crosslinked styrene-divinylbenzene column and calibrated to bisphenol A homopolycarbonate references. GPC samples are prepared at a concentration of 1 milligram (mg) per milliliter (ml), and are eluted at a flow rate of 1.5 ml per minute.

"Polycarbonates" includes homopolycarbonates (wherein each R¹ in the polymer is the same), copolymers comprising different R¹ moieties in the carbonate ("copolycarbonates"), and copolymers comprising carbonate units and other types of polymer units, such as ester units or siloxane units.

"Polycarbonate" as used herein also includes copolymers comprising carbonate units and ester units ("poly(ester-carbonate)s", also known as polyester-polycarbonates). The high heat polycarbonate copolymer can be a copolymer of bisphenol A and an ester. Such copolymers further contain, in addition to recurring carbonate units of formula (1), repeating units of formula (7) 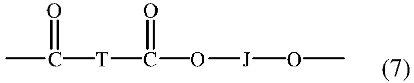 wherein J is a divalent group derived from a dihydroxy compound (including a reactive derivative thereof), and can be, for example, a C₂₋₁₀ alkylene, a C₆₋₂₀ cycloalkylene, a C₆₋₂₀ arylene, or a polyoxyalkylene in which the alkylene groups contain 2-6 carbon atoms, specifically 2, 3, or 4 carbon atoms; and T is a divalent group derived from a dicarboxylic acid (including a reactive derivative thereof), and can be, for example, a C₂₋₂₀ alkylene, a C₆₋₂₀ cycloalkylene, or a C₆₋₂₀ arylene. Copolyesters containing a combination of different T or J groups can be used. The polyester units can be branched or linear.

In an embodiment, J is a C₂₋₃₀ alkylene group having a straight chain, branched chain, or cyclic (including polycyclic) structure, for example ethylene, n-propylene, i-proplyene, 1,4-butylene, 1,6-cyclohexylene, or 1,4-methylenecyclohexane. In another embodiment, J is derived from a bisphenol of formula (3), e.g., bisphenol A. In another embodiment, J is derived from an aromatic dihydroxy compound of formula (2), e.g., resorcinol.

Aromatic dicarboxylic acids that can be used to prepare the polyester units include isophthalic or terephthalic acid, 1,2-di(p-carboxyphenyl)ethane, 4,4'-dicarboxydiphenyl ether, 4,4'-bisbenzoic acid, or a combination comprising at least one of the foregoing acids. Acids containing fused rings can also be present, such as in 1,4-, 1,5-, or 2,6-naphthalenedicarboxylic acids. Specific dicarboxylic acids include terephthalic acid, isophthalic acid, naphthalene dicarboxylic acid, 1,4-cyclohexane dicarboxylic acid, or a combination comprising at least one of the foregoing acids. A specific dicarboxylic acid comprises a combination of isophthalic acid and terephthalic acid wherein the weight ratio of isophthalic acid to terephthalic acid is 91:9 to 2:98.

Specific ester units include ethylene terephthalate, n-propylene terephthalate, n-butylene terephthalate, 1,4-cyclohexanedimethylene terephthalate, and ester units derived from isophthalic acid, terephthalic acid, and resorcinol (ITR). The molar ratio of ester units to carbonate units in the copolymers can vary broadly, for example 1:99 to 99:1, specifically 10:90 to 90:10, more specifically 25:75 to 75:25, or 2:98 to 15:85, depending on the desired properties of the final polycarbonate composition.

In a specific embodiment, the polycarbonate copolymer is a poly(bisphenol A carbonate)-co-(bisphenol A-phthalate-ester) of formula (8a) 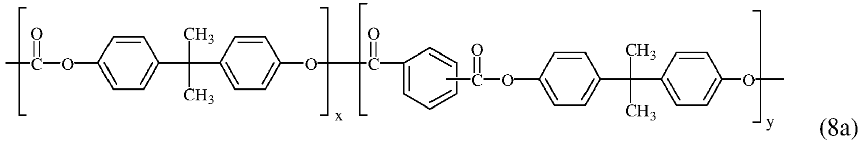 wherein y and x represent the weight percent of arylate-bisphenol A ester units and bisphenol A carbonate units, respectively. Generally, the units are present as blocks. In an embodiment, the weight percent of ester units to carbonate units x in the copolymers is 50:50 to 99:1, or 55:45 to 90:10, or 75:25 to 95:5. Specific poly(ester-carbonate)s are those including bisphenol A carbonate units and isophthalate-terephthalate-bisphenol A ester units, also commonly referred to as poly(phthalate-carbonate)s (PPC). PPCs can comprise a compound of formula (8a) comprising 15-25 wt% of carbonate units and 75-85 wt% of ester units having a molar ratio of isophthalate to terephthalate from 98:2 to 88:12.

The polycarbonate copolymers comprising arylate ester units are generally prepared from polyester blocks. The polyester blocks can also be prepared by interfacial polymerization. Rather than utilizing the dicarboxylic acid or diol per se, the reactive derivatives of the acid or diol, such as the corresponding acid halides, in particular the acid dichlorides and the acid dibromides can be used. Thus, for example instead of using isophthalic acid, terephthalic acid, or a combination comprising at least one of the foregoing acids, isophthaloyl dichloride, terephthaloyl dichloride, or a combination comprising at least one of the foregoing dichlorides can be used. The polyesters can also be obtained by melt-process condensation as described above, by solution phase condensation, or by transesterification polymerization wherein, for example, a dialkyl ester such as dimethyl terephthalate can be transesterified with the dihydroxy reactant using acid catalysis, to generate the polyester blocks. Branched polyester blocks, in which a branching agent, for example, a glycol having three or more hydroxyl groups or a trifunctional or multifunctional carboxylic acid has been incorporated, can be used. Furthermore, it can be desirable to have various concentrations of acid and hydroxyl end groups on the polyester blocks, depending on the ultimate end use of the polycarbonate composition.

The polycarbonate copolymers comprising arylate ester units can have a weight average molecular weight of 10,000-50,000 g/mol, specifically 15,000-35,000 g/mol, more specifically 20,000-30,000 g/mol. Molecular weight determinations are performed using GPC using a cross linked styrene-divinyl benzene column, at a sample concentration of 1 milligram per milliliter, and as calibrated with bisphenol A homopolycarbonate standards. Samples are eluted at a flow rate of 1.0 ml/min with methylene chloride as the eluent.

The high heat polycarbonate copolymer of the instant invention can be a copolymer of bisphenol-A and a so-called high heat monomer.

In a specific embodiment the high heat comonomer is a phthalimidine of formula (15) 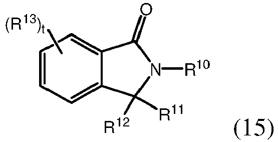 wherein each R¹⁰, R¹¹, R¹², and R¹³ are independently hydrogen, a C₁₋₂₀ alkylene, a C₁₋₂₀ substituted alkylene, a C₆₋₂₀ arylene, or a C₆₋₂₀ substituted arylene, and t is an integer from 0 to 4. In particular embodiments, the phthalimidine monomer is 2-phenyl-3,3-bis(4-hydroxyphenyl) phthalimidine, which is illustrated below as formula (15a).

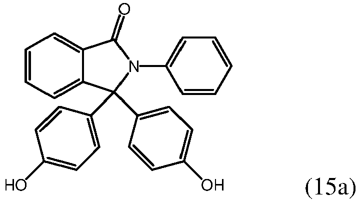

The phthalimidine blocks can make up from 20-50 mole% of the copolymer, preferably from 25-40 mole%. The polycarbonate blocks can make up from 50-80 mole% of the copolymer, preferably from 60-85 mole%. It is specifically contemplated that the bisphenol-phthalimidine copolymer is a diblock copolymer. The bisphenol-phthalimidine copolymer may have a weight average molecular weight of from 15,000-30,000 g/mol.

The polysiloxane blocks in the poly(carbonate-siloxane) of the instant invention comprise repeating diorganosiloxane units as in formula (10) 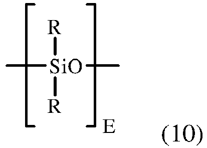 wherein each R is independently a C₁₋₁₃ monovalent organic group. For example, R can be a C₁-C₁₃ alkyl, C₁-C₁₃ alkoxy, C₂-C₁₃ alkenyl, C₂-C₁₃ alkenyloxy, C₃-C₆ cycloalkyl, C₃-C₆ cycloalkoxy, C₆-C₁₄ aryl, C₆-C₁₀ aryloxy, C₇-C₁₃ arylalkyl, C₇-C₁₃ aralkoxy, C₇-C₁₃ alkylaryl, or C₇-C₁₃ alkylaryloxy. The foregoing groups can be fully or partially halogenated with fluorine, chlorine, bromine, or iodine, or a combination thereof. In an embodiment, where a transparent poly(carbonate-siloxane) is desired, R is unsubstituted by halogen. Combinations of the foregoing R groups can be used in the same copolymer.

The value of E in formula (10) can vary widely depending on the type and relative amount of each component in the polycarbonate composition, the desired properties of the polycarbonate composition, and like considerations. Generally, E has an average value of 2-1,000, specifically 2-500, 2-200, or 2-125, 5-80, or 10-70. In an embodiment, E has an average value of 10-80 or 10-40, and in still another embodiment, E has an average value of 40-80, or 40-70. Where E is of a lower value, e.g., less than 40, it can be desirable to use a relatively larger amount of the poly(carbonate-siloxane) copolymer. Conversely, where E is of a higher value, e.g., greater than 40, a relatively lower amount of the poly(carbonate-siloxane) copolymer can be used.

A combination of a first and a second (or more) poly(carbonate-siloxane) copolymers can be used, wherein the average value of E of the first copolymer is less than the average value of E of the second copolymer.

In an embodiment, the polysiloxane blocks are of formula (11) 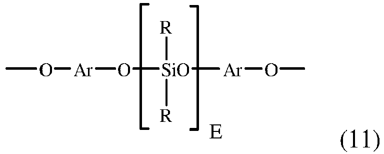 wherein E is as defined above; each R can be the same or different, and is as defined above; and each Ar can be the same or different, and is a substituted or unsubstituted C₆-C₃₀ arylene, wherein the bonds are directly connected to an aromatic moiety. Ar groups in formula (11) can be derived from a C₆-C₃₀ dihydroxyarylene compound, for example a dihydroxyarylene compound of formula (3) above. Dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane. Combinations comprising at least one of the foregoing dihydroxy compounds can also be used.

In another embodiment, polysiloxane blocks are of formula (13) 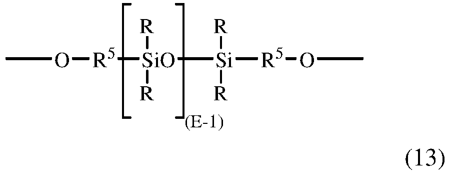 wherein R and E are as described above, and each R⁵ is independently a divalent C₁-C₃₀ organic group, and wherein the polymerized polysiloxane unit is the reaction residue of its corresponding dihydroxy compound. In a specific embodiment, the polysiloxane blocks are of formula (14): 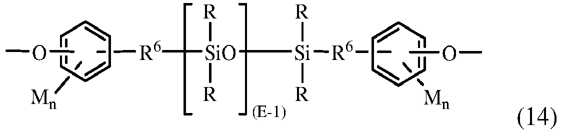 wherein R and E are as defined above. R⁶ in formula (14) is a divalent C₂-C₈ aliphatic. Each M in formula (14) can be the same or different, and can be a halogen, cyano, nitro, C₁-C₈ alkylthio, C₁-C₈ alkyl, C₁-C₈ alkoxy, C₂-C₈ alkenyl, C₂-C₈ alkenyloxy, C₃-C₈ cycloalkyl, C₃-C₈ cycloalkoxy, C₆-C₁₀ aryl, C₆-C₁₀ aryloxy, C₇-C₁₂ aralkyl, C₇-C₁₂ aralkoxy, C₇-C₁₂ alkylaryl, or C₇-C₁₂ alkylaryloxy, wherein each n is independently 0, 1, 2, 3, or 4.

In an embodiment, M is bromo or chloro, an alkyl such as methyl, ethyl, or propyl, an alkoxy such as methoxy, ethoxy, or propoxy, or an aryl such as phenyl, chlorophenyl, or tolyl; R⁶ is a dimethylene, trimethylene or tetramethylene; and R is a C₁₋₈ alkyl, haloalkyl such as trifluoropropyl, cyanoalkyl, or aryl such as phenyl, chlorophenyl or tolyl. In another embodiment, R is methyl, or a combination of methyl and trifluoropropyl, or a combination of methyl and phenyl. In still another embodiment, R is methyl, M is methoxy, n is one, R⁶ is a divalent C₁-C₃ aliphatic group. Specific polysiloxane blocks are of the formula 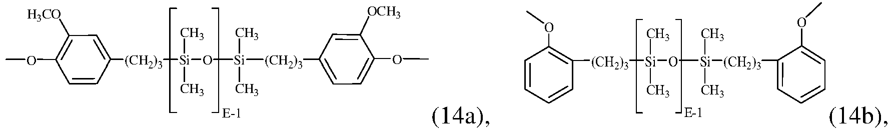 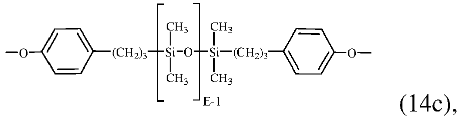 or a combination comprising at least one of the foregoing, wherein E has an average value of 2-200, 2-125, 5-125, 5-100, 5-50, 20-80, or 5-20.

Blocks of formula (14) can be derived from the corresponding dihydroxy polysiloxane, which in turn can be prepared effecting a platinum-catalyzed addition between the siloxane hydride and an aliphatically unsaturated monohydric phenol such as eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. The poly(carbonate-siloxane) copolymers can then be manufactured, for example, by the synthetic procedure of European Patent Application Publication No. 0 524 731 A1 of Hoover, page 5, Preparation 2.

The poly(carbonate-siloxane) copolymers can comprise 50-99 wt% of carbonate units and 1-50 wt% siloxane units. Within this range, the poly(carbonate-siloxane) copolymer can comprise 70-90 wt%, more specifically 75-85 wt% of carbonate units and 10-30 wt%, more specifically 15-25 wt% siloxane units.

In an embodiment, a blend is used, in particular a blend of a bisphenol A homopolycarbonate and a poly(carbonate-siloxane) block copolymer of bisphenol A blocks and eugenol capped polydimethylsilioxane blocks, of the formula 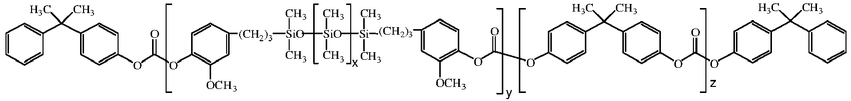 wherein x is 1-200, specifically 5-85, specifically 10-70, specifically 15-65, and more specifically 40-60; x is 1-500, or 10-200, and z is 1-1000, or 10-800. In an embodiment, x is 1-200, y is 1-90 and z is 1-600, and in another embodiment, x is 30-50, y is 10-30 and z is 45-600. The polysiloxane blocks can be randomly distributed or controlled distributed among the polycarbonate blocks.

The poly(carbonate-siloxane) copolymer can be manufactured by reaction of the corresponding dihydroxy polysiloxane with a carbonate source and a dihydroxy aromatic compound of formula (3), optionally in the presence of a phase transfer catalyst as described above. Conditions are similar to those useful in forming polycarbonates. Alternatively, the poly(carbonate-siloxane) copolymers can be prepared by co-reacting in a molten state, the dihydroxy monomers and a diaryl carbonate ester, such as diphenyl carbonate, in the presence of a transesterification catalyst as described above. Generally, the amount of dihydroxy polysiloxane is selected so as to produce a copolymer comprising 1-60 mole percent of polysiloxane blocks relative to the moles of polycarbonate blocks, and more generally, 3-50 mole percent of polysiloxane blocks relative to the moles of polycarbonate blocks.

Poly(carbonate-siloxane)s can have a weight average molecular weight of 10,000-50,000 grams per mole (g/mol), specifically 25,000-35,000 g/mol as measured by gel permeation chromatography using a crosslinked styrene-divinyl benzene column, at a sample concentration of 1 milligram per milliliter (mg/mL), and as calibrated with bisphenol A homopolycarbonate standards.

Poly(carbonate-siloxane)s can have a melt volume flow rate, measured at 300°C/1.2 kilogram (kg), of 1-50 cubic centimeters per 10 minutes (cc/10 min), specifically 2-30 cc/10 min. Mixtures of poly(carbonate-siloxane)s of different flow properties can be used to achieve the overall desired flow property.

The polycarbonate homopolymer in the polycarbonate composition according to the instant invention can be a linear polycarbonate homopolymer containing bisphenol A carbonate units (BPA-PC), commercially available under the trade name LEXAN from SABIC. The high heat polycarbonate copolymer includes poly(aromatic ester-carbonate)s comprising bisphenol A carbonate units and isophthalate-terephthalate-bisphenol A ester units, also commonly referred to as or poly(phthalate-carbonate)s (PPC). A specific copolycarbonate that can be used in the polycarbonate composition comprises bisphenol A and bulky bisphenol carbonate units, i.e., derived from bisphenols containing at least 12 carbon atoms, for example 12-60 carbon atoms or 20-40 carbon atoms. Examples of such copolycarbonates include copolycarbonates comprising bisphenol A carbonate units and 2-phenyl-3,3'-bis(4-hydroxyphenyl) phthalimidine carbonate units (a BPA-PPPBP copolymer, commercially available under the trade name XHT from SABIC). The poly(carbonate-siloxane) in the polycarbonate composition comprises repeating siloxane units (polycarbonate-siloxanes), for example those comprising bisphenol A carbonate units and siloxane units (e.g., blocks containing 5-200 dimethylsiloxane units), such as those commercially available under the trade name EXL from SABIC.

The polycarbonate composition of the instant invention also comprises glass fibers. The term "glass" here refers generally to a material, natural or synthetic, which contains silicon dioxide (SiO₂) or silica as its main material. The glass can be E, A, C, ECR, R, S, D, or NE glasses, or the like. The glass fiber may take any shape, for example elongated fibers or "whiskers," or glass flakes. The glass fibers can be provided in the form of monofilament or multifilament fibers and can be used individually or in combination with other types of fiber, through, for example, co-weaving or core/sheath, side-by-side, orange-type or matrix and fibril constructions, or by other methods known to one skilled in the art of fiber manufacture. Co-woven structures include glass fiber-carbon fiber, carbon fiber-aromatic polyimide (aramid) fiber, and aromatic polyimide fiberglass fiber or the like. Fibrous fillers can be supplied in the form of, for example, rovings, woven fibrous reinforcements, such as 0-90 degree fabrics or the like; non-woven fibrous reinforcements such as continuous strand mat, chopped strand mat, tissues, papers and felts or the like; or three-dimensional reinforcements such as braids. In an embodiment, the glass fiber is a non-bonding glass fiber commercially available from Owens Corning. In an embodiment, the polycarbonate composition does not contain bonding glass fibers, which are believed to lower the impact resistance of a composition.

The polycarbonate composition of the instant invention further includes a flame retardant salts, for example salts of C₂₋₁₆ alkyl sulfonates such as potassium perfluorobutane sulfonate (Rimar salt), potassium perfluoroctane sulfonate, and tetraethylammonium perfluorohexane sulfonate, salts of aromatic sulfonates such as sodium benzene sulfonate, sodium toluene sulfonate (NaTS), and the like, salts of aromatic sulfone sulfonates such as potassium diphenylsulfone sulfonate (KSS), and the like; salts formed by reacting for example an alkali metal or alkaline earth metal and an inorganic acid complex salt, preferably an alkali metal or alkaline earth metal salt of carbonic acid or a fluoro-anion complex such as Li₃AlF₆, BaSiF₆, KBF₄, K₃AlF₆, KAlF₄, K₂SiF₆, or Na₃AlF₆. Rimar salt and KSS and NaTS, alone or in combination with other flame retardants, are particularly useful. According to the invention, flame retardant salts are present in amounts of 0.1 to 0.7 wt%, based on the total weight of the polycarbonate composition. Rimar salt and KSS and NaTS, alone or in combination with other flame retardants, are particularly useful. The C₂₋₁₆ alkyl sulfonates salt is preferably present in the polycarbonate composition in a total amount of 0.1 to 0.7 wt%, based on the total weight of the polycarbonate composition. The aromatic sulfonate sulfonate salt is present in the polycarbonate composition in a total amount of 0.1 to 0.7 wt%, based on the total weight of the polycarbonate composition.

The polycarbonate composition of the instant invention can include various additives ordinarily incorporated into polymer compositions of this type, with the proviso that the additive(s) are selected so as to not significantly adversely affect the desired properties of the polycarbonate composition, in particular heat resistance and impact properties. Such additives can be mixed at a suitable time during the mixing of the components for forming the polycarbonate composition. Additives include, fillers, reinforcing agents, antioxidants, heat stabilizers, light stabilizers, ultraviolet (UV) light stabilizers, plasticizers, lubricants, mold release agents, antistatic agents, colorants such as carbon black, and organic dyes, surface effect additives, radiation stabilizers, an anti-fog agent, an antimicrobial agent, and anti-drip agents. A combination of additives can be used, for example a colorant, a surface effect additive, a filler, a reinforcing agent, an antioxidant, a heat stabilizer, a light stabilizer, an ultraviolet light stabilizer, a plasticizer, a lubricant, a mold release agent, an antistatic agent, anti-fog agent, antimicrobial agent, a radiation stabilizer, or a combination comprising at least one of the foregoing. The additives are used in the amounts generally known to be effective. According to the invention, the total amount of the additives is up to 10 wt%, preferably 0.01-5 wt%, based on the total weight of the polycarbonate composition.

In an embodiment, the polycarbonate composition does not include titanium dioxide. In an embodiment, the additive composition is a heat stabilizer, a thermal stabilizer, an ultraviolet stabilizer, a release agent, or a combination comprising at least one of the foregoing.

Heat stabilizer additives include organophosphites (e.g. triphenyl phosphite, tris-(2,6-dimethylphenyl)phosphite, tris-(mixed mono-and di-nonylphenyl)phosphite or the like), phosphonates (e.g., dimethylbenzene phosphonate or the like), phosphates (e.g., trimethyl phosphate, or the like), or combinations comprising at least one of the foregoing heat stabilizers. The heat stabilizer can be tris(2,4-di-tert-butylphenyl) phosphate available as IRGAPHOS 168. Heat stabilizers are generally used in amounts of 0.01-5 wt%, based on the total weight of polycarbonate composition.

Antioxidant additives include organophosphites such as tris(nonyl phenyl)phosphite, tris(2,4-di-tert-butylphenyl)phosphite, bis(2,4-di-t-butylphenyl)pentaerythritol diphosphite, distearyl pentaerythritol diphosphite; alkylated monophenols or polyphenols; alkylated reaction products of polyphenols with dienes, such as tetrakis[methylene(3,5-di-tert-butyl-4-hydroxyhydrocinnamate)] methane; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate; amides of beta-(3,5-di-tert-butyl-4-hydroxyphenyl)-propionic acid, or combinations comprising at least one of the foregoing antioxidants. Antioxidants are typically used in amounts of 0.01-0.1 wt%, based on the total weight of the polycarbonate composition.

Anti-drip agents can also be used in the polycarbonate composition according to the invention, for example a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. A TSAN comprises 50 wt% PTFE and 50 wt% SAN, based on the total weight of the encapsulated fluoropolymer. The SAN can comprise, for example, 75 wt% styrene and 25 wt% acrylonitrile based on the total weight of the copolymer. According to the invention, anti-drip agents can be used in amounts of 0-0.2 wt%, based on the total weight of the polycarbonate composition.

Possible fillers or reinforcing agents include, for example, silicates and silica powders such as aluminum silicate (mullite), synthetic calcium silicate, zirconium silicate, fused silica, crystalline silica graphite, natural silica sand, or the like; boron powders such as boron-nitride powder, boron-silicate powders, or the like; oxides such as TiO₂, aluminum oxide, magnesium oxide, or the like; calcium sulfate (as its anhydride, dihydrate or trihydrate); calcium carbonates such as chalk, limestone, marble, synthetic precipitated calcium carbonates, or the like; talc, including fibrous, modular, needle shaped, lamellar talc, or the like; wollastonite; surface-treated wollastonite; kaolin, including hard kaolin, soft kaolin, calcined kaolin, kaolin comprising various coatings known in the art to facilitate compatibility with the polymer matrix, or the like; single crystal fibers or "whiskers" such as silicon carbide, alumina, boron carbide, iron, nickel, copper, or the like; fibers (including continuous and chopped fibers) such as asbestos, carbon fibers; sulfides such as molybdenum sulfide, zinc sulfide or the like; barium compounds such as barium titanate, barium ferrite, barium sulfate, heavy spar, or the like; metals and metal oxides such as particulate or fibrous aluminum, bronze, zinc, copper and nickel or the like; flaked fillers such as flaked silicon carbide, aluminum diboride, aluminum flakes, steel flakes or the like; fibrous fillers, for example short inorganic fibers such as those derived from blends comprising at least one of aluminum silicates, aluminum oxides, magnesium oxides, and calcium sulfate hemihydrate or the like; natural fillers and reinforcements, such as wood flour obtained by pulverizing wood, fibrous products such as cellulose, cotton, sisal, jute, starch, cork flour, lignin, ground nut shells, corn, rice grain husks or the like; organic fillers such as polytetrafluoroethylene; reinforcing organic fibrous fillers formed from organic polymers capable of forming fibers such as poly(ether ketone), polyimide, polybenzoxazole, poly(phenylene sulfide), polyesters, polyethylene, aromatic polyamides, aromatic polyimides, polyetherimides, polytetrafluoroethylene, acrylic polymers, poly(vinyl alcohol) or the like; as well as additional fillers and reinforcing agents such as mica, clay, feldspar, flue dust, fillite, quartz, quartzite, perlite, tripoli, diatomaceous earth, carbon black, or the like, or combinations comprising at least one of the foregoing fillers or reinforcing agents. The fillers and reinforcing agents can be coated with a layer of metallic material to facilitate conductivity, or surface treated with silanes to improve adhesion and dispersion with the polymer matrix.

The polycarbonates and the polycarbonate composition of the instant disclosure can be manufactured by processes such as interfacial polymerization and melt polymerization, which are known, and are described, for example, in WO 2013/175448 A1 and WO 2014/072923 A1. An end-capping agent (also referred to as a chain stopper agent or chain terminating agent) can be included during polymerization to provide end groups, for example monocyclic phenols such as phenol, p-cyanophenol, and C₁-C₂₂ alkyl-substituted phenols such as p-cumyl-phenol, resorcinol monobenzoate, and p-and tertiary-butyl phenol, monoethers of diphenols, such as p-methoxyphenol, monoesters of diphenols such as resorcinol monobenzoate, functionalized chlorides of aliphatic monocarboxylic acids such as acryloyl chloride and methacryoyl chloride, and mono-chloroformates such as phenyl chloroformate, alkyl-substituted phenyl chloroformates, p-cumyl phenyl chloroformate, and toluene chloroformate. Combinations of different end groups can be used. Branched polycarbonate blocks can be prepared by adding a branching agent during polymerization, for example trimellitic acid, trimellitic anhydride, trimellitic trichloride, tris-p-hydroxyphenylethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents can be added at a level of 0.05-2.0 wt. %. Combinations comprising linear polycarbonates and branched polycarbonates can be used.

In the manufacture of poly(ester-carbonate)s by interfacial polymerization, rather than using the dicarboxylic acid or diol directly, the reactive derivatives of the diacid or diol, such as the corresponding acid halides, in particular the acid dichlorides and the acid dibromides can be used. Thus, for example instead of using isophthalic acid, terephthalic acid, or a combination comprising at least one of the foregoing acids, isophthaloyl dichloride, terephthaloyl dichloride, or a combination comprising at least one of the foregoing dichlorides can be used.

The polycarbonates and polycarbonate compositions of the instant disclosure can be formulated by various methods known in the art. For example, powdered polycarbonates, and other optional components are first blended, optionally with any fillers, in a high speed mixer or by hand mixing. The blend is then fed into the throat of a twin-screw extruder via a hopper. Alternatively, at least one of the components can be incorporated into the polycarbonate composition by feeding it directly into the extruder at the throat or downstream through a sidestuffer, or by being compounded into a masterbatch with a desired polymer and fed into the extruder. The extruder is generally operated at a temperature higher than that necessary to cause the polycarbonate composition to flow. The extrudate can be immediately quenched in a water bath and pelletized. The pellets so prepared can be one-fourth inch long or less as desired. Such pellets can be used for subsequent molding, shaping, or forming.

The article can be in the form of a component, which can be a molded housing. The component can be an electrical circuit housing. The component can be an electrical device component, a medical device component, or a housing component for an electrical device, a vehicle light, a cell phone, a computer, a docking station, a personal data assistant (PDA), a MP3 player, a global positioning satellite (GPS) module, a circuit breaker case, or the like.

According to the invention, shaped, formed, or molded articles comprising the polycarbonate compositions are also provided. The polycarbonate compositions can be molded into useful shaped articles by a variety of methods, such as injection molding, extrusion, rotational molding, blow molding, and thermoforming. Some example of components include computer and business machine housings such as housings for monitors, handheld electronic device housings such as housings for cell phones, electrical connectors, and components of lighting fixtures, ornaments, home appliances, roofs, greenhouses, sun rooms, swimming pool enclosures, and the like. The articles, polycarbonate compositions, and methods are further illustrated by the following non-limiting examples.

### EXAMPLES

The following components are used in the examples. Unless specifically indicated otherwise, the amount of each component is in weight percent, based on the total weight of the polycarbonate composition.

**Table 1.**

| Component | Description | Supplier |
|---|---|---|
| PC-1 | BPA polycarbonate, Mw =28,000-32,000 g/mol (determined via GPC using bisphenol A homopolycarbonate standards) | SABIC |
| PC-2 | BPA polycarbonate, Mw = 19,000-23,000 g/mol (determined via GPC using bisphenol A homopolycarbonate standards) | SABIC |
| PPC | Poly(phthalate-carbonate) comprising 15-25 wt% BPA carbonate units and 75-85 wt% BPA phthalate units | SABIC |
| PPPBP/BPA | Copolycarbonate comprising 32 mol% PPPBP units, 68 mol% BPA units, Mw about 25,000 g/mol (determined via GPC using bisphenol A homopolycarbonate standards) | SABIC |
| PC-Si | Opaque poly(carbonate-siloxane) comprising 20 wt% dimethylsiloxane units, 80 wt% BPA units, Mw about 30,500 g/mol (determined via GPC using bisphenol A homopolycarbonate standards) | SABIC |
| NB GF | Non-bonding glass fiber | Owens Corning |
| Rimar | Potassium perfluorobutanesulfonate (flame retardant) | Lanxess |
| KSS | Potassium diphenylsulphon-3-sulphonate (flame retardant) | Arichem LLC |
| PETS | Pentaerythritol tetrastearate (mold release) | |
| NaTS | Sodium p-toluenesulfonate (flame retardant) | Arichem LLC |
| TSAN | SAN encapsulated PTFE (anti-drip agent) | SABIC-IP |
| Phosphite | Tris(2,4-di-tert-butylphenyl)phosphite (heat stabilizer/antioxidant) | Ciba |
| TiO₂ | Titanium dioxide (coated) | Kronos |
| Phosphazene | Phosphazene flame retardant (bisphenoxy phosphazene) | Otsuka |
| UVA | 2-(2 hydroxy-5-t-octylphenyl) benzotriazole (ultraviolet light absorber) | Hunan |

All thermoplastic compositions except where indicated were compounded on a ZSK co-rotating twin screw extruder, vacuum port located near die face. The twin-screw extruder had sufficient distributive and dispersive mixing elements to produce good mixing between the polymer compositions. The compositions were subsequently molded on an ENGEL 45T, 75T, 80T, or 90T injection-molding machine. Compositions were compounded and molded at a temperature of 285-330°C, though it will be recognized by one skilled in the art that the method is not limited to these temperatures.

Physical measurements were made using the tests and test methods described in Table 2. Unless indicated otherwise, all tests are the tests in effect in the year 2016. Injection molded test specimens were molded in accordance with ISO test methods.

**Table 2.**

| Property | Units | Description (Conditions) | Test | Specimen |
|---|---|---|---|---|
| Vicat Softening | °C | 50 N, 120°C/min | ISO306 | 4 mm thick bar |
| Notched Izod impact (INI) Ductility | Kiloj oule per meter squar ed (kJ/m ²) % | 23°C, 5.5J Pendulum Energy Percent samples with no break | ISO180 | 3 mm thick bar |
| Unnotched Izod impact (IUI) Ductility (non-broken) | kJ/m² % | 23°C, 5.5J Pendulum Energy Percent samples with no breaking | ISO180 | 3 mm thick bar |
| pFTP (V2) | | Probability of first-time pass (V2), measured at 23°C, 48 h | UL-94 | |

The ductility for samples is measured using the Izod notched impact test according to ISO 180, and the ductility is specifically not measured using the multiaxial impact (MAI) test of ISO 6603. This serves as a proxy for determining whether the material will shatter rather than bending or deforming. The two tests will result in different measurements for the same composition. The percent of samples tested with ductile break is reported. A result of 100% ductility means 100% of the samples tested had a ductile break, rather than shattering. Flammability tests were performed following the procedure of Underwriter's Laboratory Bulletin 94 entitled "Tests for Flammability of Plastic Materials, UL94." According to this procedure, materials may be classified as V-0, V-1, or V-2 on the basis of the test results obtained for samples of a given thickness. It is assumed that a material that meets a given standard at a given thickness can also meet the same standard at greater thicknesses (e.g. a material that obtains V0 performance at 0.8 mm thickness can also obtain V0 performance at 1.0 mm thickness, 1.5 mm, etc.). The samples are made according to the UL94 test procedure. Samples were burned in a vertical orientation after aging for 48 hours at 23°C. At least 10 injection molded bars were burned for each UL test. The criteria for each of the flammability classifications tested are described below.

V0: In a sample placed so that its long axis is 180 degrees to the flame, the average period of flaming and/or smoldering after removing the igniting flame does not exceed ten seconds and none of the vertically placed samples produces drips of burning particles that ignite absorbent cotton, and no specimen burns up to the holding clamp after flame or after glow. V-1, V-2: In a sample placed so that its long axis is 180 degrees to the flame, the average period of flaming and/or smoldering after removing the igniting flame does not exceed thirty seconds and, for a V-1 rating, none of the vertically placed samples produces drips of burning particles that ignite absorbent cotton. The V2 standard is the same as V-1, except that flaming drips that ignite the cotton are permitted.

The data were also analyzed by calculation of the average flame out time, standard deviation of the flame out time, as the total number of drips, and using statistical methods, such as those set forth in U.S. Pat. No. 6,308,142 to convert that data to a prediction of the probability of first time pass, or "p(FTP)", that a particular sample formulation would achieve a V0, V1, or V2 "pass" rating in the conventional UL94 testing of 5 bars. Preferably, p(FTP) is as close to 1 as possible, for example, greater than or equal to about 0.70, or greater than or equal to about 0.80, or greater than or equal to about 0.90, for maximum flame-retardant performance in UL testing. These standards are more stringent than merely specifying compliance with the referenced V-0 or V-1 test.

A composition (CEx. 1) was prepared using PC-1 and PC-Si alone, and with the addition of increasing amount of PPC (CEx. 2-6) or PPPBP/BPA (CEx. 7).

**Table 3.**

| Component | | Units | CEx. 1 | CEx. 2 | CEx. 3 | CEx. 4 | CEx. 5 | CEx. 6 | CEx. 7 |
|---|---|---|---|---|---|---|---|---|---|
| PC-1 | | wt% | 78.45 | 64.05 | 50.35 | 36.65 | 22.85 | 9.15 | 50.85 |
| PPC | | wt% | | 14.4 | 28.1 | 41.8 | 55.6 | 69.3 | |
| PC-Si | | wt% | 12 | 12 | 12 | 12 | 12 | 12 | 12 |
| PPPBP/BPA | | wt% | | | | | | | 27.6 |
| NB GF | | wt% | 9 | 9 | 9 | 9 | 9 | 9 | 9 |
| TSAN | | wt% | 0.5 | 0.5 | 0.5 | 0.5 | 0.5 | 0.5 | 0.5 |
| Phosphite | | wt% | 0.05 | 0.05 | 0.05 | 0.05 | 0.05 | 0.05 | 0.05 |
| Properties | | | | | | | | | |
| Vicat | | °C | 144.3 | 148.7 | 155.1 | 156.6 | 162.3 | 163.8 | 161.7 |
| INI | Impact (23°C) | (kJ/m²) | 20.0 | 19.8 | 18.1 | 17.3 | 15.6 | 15.1 | 11.0 |
| | Ductility (23°C) | (%) | 100 | 100 | 100 | 100 | 40 | 60 | 0 |

The data show that the composition with PC-1 and PC-Si alone had good impact strength, but lower heat resistance than the compositions with PPC or PPPBP/BPA. Increasing amounts of PPC improved heat resistance, but adversely affected impact properties, as did addition of PPPBP/BPA.

The effect of PPC on flammability was tested.

**Table 4.**

| Component | Unit | CEx. 8 | CEx. 9 | CEx. 10 |
|---|---|---|---|---|
| PC-2 | wt% | 64.25 | 36.75 | 9.25 |
| PPC | wt% | 14.5 | 42 | 69.5 |
| PC-Si | wt% | 12 | 12 | 12 |
| NB GF | wt% | 9 | 9 | 9 |
| Rimar Salt | wt% | 0.2 | 0.2 | 0.2 |
| Phosphite | wt% | 0.05 | 0.05 | 0.05 |

| Property | | | | |
|---|---|---|---|---|
| Vicat (50 N, 120°C/min) | °C | 150 | 157.6 | 167.8 |
| INI Impact (23°C) | kJ/m² | 18.4 | 16.5 | 15.2 |
| Ductility (23°C) | % | 100 | 50 | 20 |
| pFTP (V2) | | 0 | 0 | 0.5 |

These experiments show that an increase in the amount of PPC resulted in improved flammability performance (CEx. 10 vs. CEx. 8). In particular, a higher pFTP is seen. As in CEx. 2-6, impact properties decreased with increasing PPC concentration.

A series of examples were made using an intermediate amount of PPC to attain a combination of acceptable impact and improved flame retardance. Varying amounts of TSAN were added. (CEx. 11-14).

**Table 5.**

| Component | | Unit | CEx. 11 | CEx. 12 | CEx. 13 | CEx. 14 |
|---|---|---|---|---|---|---|
| PC-2 | | wt% | 33.85 | 33.75 | 33.65 | 33.45 |
| PC-Si | | wt% | 12 | 12 | 12 | 12 |
| PPC | | wt% | 42 | 42 | 42 | 42 |
| NB GF | | wt% | 9 | 9 | 9 | 9 |
| TSAN | | wt% | 0.1 | 0.2 | 0.3 | 0.5 |
| Phosphite | | wt% | 0.05 | 0.05 | 0.05 | 0.05 |
| TiOz | | wt% | 3 | 3 | 3 | 3 |

| Property | | | | | | |
|---|---|---|---|---|---|---|
| Vicat (50 N, 120°C/min) | | °C | 157.3 | 158.6 | 157.2 | 157.2 |
| INI | Impact (23°C) | kJ/m² | 20 | 19.9 | 18.9 | 16.9 |
| | Ductility (23°C) | % | 100 | 100 | 100 | 100 |
| IUI | Impact (23°C) | kJ/m² | 131 | 129 | 116 | 113 |
| | Non-broken (23°C) | % | 0 | 0 | 0 | 0 |
| pFTP (V2) | | | 0.60 | 0.01 | 0.00 | 0.00 |

Increasing amounts of TSAN further resulted in decreased impact and surprisingly, pFTP decreases as well.

A series of experiments were performed using an increasing amount of Rimar salt. TSAN was included in all of these examples.

**Table 6.**

| Component | | Unit | CEx. 15 | CEx. 16 | CEx. 17 | CEx. 18 | CEx. 19 | CEx. 20 |
|---|---|---|---|---|---|---|---|---|
| PC-2 | | wt% | 33.75 | 33.7 | 33.675 | 33.65 | 33.55 | 33.45 |
| PC-Si | | wt% | 12 | 12 | 12 | 12 | 12 | 12 |
| PPC | | wt% | 42 | 42 | 42 | 42 | 42 | 42 |
| NB GF | | wt% | 9 | 9 | 9 | 9 | 9 | 9 |
| TSAN | | wt% | 0.2 | 0.2 | 0.2 | 0.2 | 0.2 | 0.2 |
| Rimar Salt | | wt% | 0 | 0.05 | 0.075 | 0.1 | 0.2 | 0.3 |
| Phosphite | | wt% | 0.05 | 0.05 | 0.05 | 0.05 | 0.05 | 0.05 |
| TiOz | | wt% | 3 | 3 | 3 | 3 | 3 | 3 |

| Property | | | | | | | | |
|---|---|---|---|---|---|---|---|---|
| Vicat (50 N, 120°C/min) | | °C | 160.0 | 156.5 | 156.7 | 158.1 | 155.7 | 156.5 |
| INI | Impact (23°C) | kJ/m² | 17.4 | 15.0 | 14.7 | 13.6 | 15.4 | 15.1 |
| | Ductility (23°C) | % | 100 | 100 | 75 | 86 | 100 | 100 |
| IUI | Impact (23°C) | kJ/m² | 134 | 97 | 97 | 117 | 109 | 110 |
| | Non-broken (23°C) | % | 0 | 0 | 0 | 0 | 0 | 0 |
| pFTP (V2) | | - | 0.03 | 0.01 | 0.07 | 0.00 | .042 | 0.63 |

As shown in the results, an increase in the amount of Rimar salt improves the flammability resistance of the composition (CEx. 20 vs. CEx. 15). Impact properties are adversely affected, however, compared to the composition with no Rimar salt (CEx. 15)

A series of experiments were performed using KSS flame retardant instead of Rimar salt, optionally in combination with NaTS.

**Table 7.**

| Component | | Units | CEx. 21 | CEx. 22 | CEx. 23 | CEx. 24 | CEx. 25 | CEx. 26 |
|---|---|---|---|---|---|---|---|---|
| PC-2 | | wt% | 33.75 | 33.65 | 33.55 | 33.45 | 33.25 | 33.45 |
| PC-Si | | wt% | 12 | 12 | 12 | 12 | 12 | 12 |
| PPC | | wt% | 42 | 42 | 42 | 42 | 42 | 42 |
| NB GF | | wt% | 9 | 9 | 9 | 9 | 9 | 9 |
| TSAN | | wt% | 0.2 | 0.2 | 0.2 | 0.2 | 0.2 | 0.2 |
| KSS | | wt% | 0 | 0.1 | 0.2 | 0.3 | 0.5 | 0.2 |
| NaTS | | wt% | | | | | | 0.1 |
| Phosphite | | wt% | 0.05 | 0.05 | 0.05 | 0.05 | 0.05 | 0.05 |
| TiOz | | wt% | 3 | 3 | 3 | 3 | 3 | 3 |

| Property | | | | | | | | |
|---|---|---|---|---|---|---|---|---|
| Vicat (50 N, 120°C/min) | | °C | 159.1 | 157.2 | 157.4 | 157.9 | 157.3 | 157.6 |
| INI | Impact (23°C) | kJ/m² | 17.9 | 1650% | 1750% | 1690% | 17.6 | 16.2 |
| | Ductility (23°C) | % | 100 | 100 | 100 | 100 | 100 | 100 |
| IUI | Impact (23°C) | kJ/m² | | 115 | 121 | 126 | 132 | 128 |
| | Non-broken (23°C) | % | | 0 | 0 | 0 | 0 | 0 |
| pFTP (V2) | | - | 0 | 0.33 | 0.35 | 0.34 | 0.33 | 0.63 |

As shown in Table 7, the best pFTP results were obtained when NaTS was also present (CEx. 26).

A series of experiments was performed using phosphazene flame retardant.

**Table 8.**

| Component | | | Units | CEx. 27 | CEx. 28 | CEx. 29 | CEx. 30 | CEx. 31 | CEx. 32 |
|---|---|---|---|---|---|---|---|---|---|
| PC-2 | | | wt% | 33.75 | 33.65 | 33.55 | 33.45 | 33.25 | 32.75 |
| PC-Si | | | wt% | 12 | 12 | 12 | 12 | 12 | 12 |
| PPC | | | wt% | 42 | 42 | 42 | 42 | 42 | 42 |
| NB GF | | | wt% | 9 | 9 | 9 | 9 | 9 | 9 |
| TSAN | | | wt% | 0.2 | 0.2 | 0.2 | 0.2 | 0.2 | 0.2 |
| Phosphazene | | | wt% | 0 | 0.1 | 0.2 | 0.3 | 0.5 | 1 |
| Phosphite | | | wt% | 0.05 | 0.05 | 0.05 | 0.05 | 0.05 | 0.05 |
| TiOz | | | wt% | 3 | 3 | 3 | 3 | 3 | 3 |

| Property | | | Units | | | | | | |
|---|---|---|---|---|---|---|---|---|---|
| Vicat (50 N, 120°C/min) | | | °C | 157.3 | 157 | 156.7 | 156.8 | 155.3 | 154.4 |
| INI | Impact (23°C) | | kJ/m² | 19.1 | 18.9 | 20.1 | 19.8 | 18.5 | 17.9 |
| | Ductility (23°C) | | % | 100 | 100 | 100 | 100 | 100 | 100 |
| IUI | Impact (23°C) | | kJ/m² | 116 | 137 | 132 | 118 | 118 | 135 |
| | Non-broken (23°C) | | % | 0 | 0 | 0 | 0 | 0 | 0 |
| pFTP (V2) | | | - | 0.00 | 0.00 | 0.00 | 0.00 | 0.00 | 0.00 |

Impact properties were generally good. Surprisingly, however, the use of phosphazene did not improve the pFTP.

A series of experiments was performed using Rimar salt, and increasing the amount of TSAN from 0.06-0.2 wt%.

**Table 9.**

| Component | Unit | CEx. 33 | CEx. 34 | CEx. 35 | CEx. 36 | CEx. 37 | CEx. 38 | CEx. 39 | CEx. 40 |
|---|---|---|---|---|---|---|---|---|---|
| PC-2 | wt% | 33.89 | 33.8 | 33.36 | 33.56 | 33.25 | 33.75 | 33.45 | 33.72 |
| PPC | wt% | 42 | 42 | 42 | 42 | 42 | 42 | 42 | 42 |
| PPPBP/BPA | wt% | 12 | 12 | 12 | 12 | 12 | 12 | 12 | 12 |
| NB GF | wt% | 9 | 9 | 9 | 9 | 9 | 9 | 9 | 9 |
| Rimar salt | wt% | | 0.15 | 0.5 | 0.28 | 0.5 | | 0.5 | 0.23 |
| TSAN | wt% | 0.06 | | 0.09 | 0.11 | 0.2 | 0.2 | | |
| Phosphite | wt% | 0.05 | 0.05 | 0.05 | 0.05 | 0.05 | 0.05 | 0.05 | 0.05 |
| TiOz | wt% | 3 | 3 | 3 | 3 | 3 | 3 | 3 | 3 |

| Properties | | | | | | | | | |
|---|---|---|---|---|---|---|---|---|---|
| Vicat (50 N, 120°C/min) | °C | 157.5 | 155.7 | 156.4 | 155.7 | 155.8 | 157.0 | 156.7 | 154.6 |
| INI Impact (23°C) | kJ/m² | 20.4 | 17.5 | 18.0 | 16.4 | 15.7 | 17.5 | 15.7 | 15.3 |
| Ductility (23°C) | % | 100 | 100 | 80 | 100 | 100 | 100 | 100 | 100 |
| pFTP (V2) | - | 0.01 | 0.43 | 0.91 | 0.61 | 0.67 | 0.81 | 0.99 | 0.78 |

With the increase of the Rimar loading pFTP increases and with that flammability robustness is higher. Lower loadings of TSAN have positive effect on flammability.

A series of experiments was performed adding NaTS to compositions optionally containing KSS and TSAN.

**Table 10.**

| Component | Unit | CEx. 41 | CEx. 42 | CEx. 43 | CEx. 44 | CEx. 45 | CEx. 46 | CEx. 47 | CEx. 48 |
|---|---|---|---|---|---|---|---|---|---|
| PC-2 | wt% | 33.85 | 33.71 | 33.69 | 33.48 | 33.15 | 33.35 | 33.5 | 33.24 |
| PPC | wt% | 42 | 42 | 42 | 42 | 42 | 42 | 42 | 42 |
| PPPBP/BPA | wt% | 12 | 12 | 12 | 12 | 12 | 12 | 12 | 12 |
| NB GF | wt% | 9 | 9 | 9 | 9 | 9 | 9 | 9 | 9 |
| KSS | wt% | | | 0.09 | 0.28 | 0.5 | 0.5 | 0.15 | 0.5 |
| NaTS | wt% | | 0.14 | 0.07 | 0.09 | 0.2 | | 0.2 | 0.11 |
| TSAN | wt% | 0.1 | 0.1 | 0.1 | 0.1 | 0.1 | 0.1 | 0.1 | 0.1 |
| Phosphite | wt% | 0.05 | 0.05 | 0.05 | 0.05 | 0.05 | 0.05 | 0.05 | 0.05 |
| TiOz | wt% | 3 | 3 | 3 | 3 | 3 | 3 | 3 | 3 |
| Vicat (50 N, 120°C/min) | °C | 157.3 | 156.9 | 156.4 | 156.2 | 156.5 | 156.3 | 156.5 | 156.6 |
| INI Impact (23°C) | kJ/m² | 17.9 | 17 | 16.4 | 15.7 | 15.9 | 16.1 | 16.7 | 16.3 |
| Ductility (23°C) | % | 100 | 90 | 100 | 87 | 80 | 100 | 100 | 80 |
| pFTP (V2) | - | 0.00 | 0.57 | 0.65 | 0.48 | 0.47 | .019 | 0.34 | 0.80 |

These results show that in the absence of KSS, adding NaTS gives better pFTP. A combination of KSS and NaTS further improves pFTP.

A set of Examples containing a high heat copolycarbonate instead of a poly(phthalate-carbonate), no TSAN, and either Rimar salt or KSS and NaTS were formulated and analyzed in Ex. 49-54.

**Table 11.**

| Component | Unit | Ex. 49 | Ex. 50 | Ex. 51 | Ex. 52 | Ex. 53 | Ex. 54 |
|---|---|---|---|---|---|---|---|
| PC-1 | wt% | 51.1 | 43.6 | 36.1 | 50.85 | 43.35 | 35.85 |
| PC-2 | wt% | | 7.5 | 15 | | 7.5 | 15 |
| PPC | wt% | 24 | 24 | 24 | 24 | 24 | 24 |
| PC-Si | wt% | 12 | 12 | 12 | 12 | 12 | 12 |
| NB GF | wt% | 9 | 9 | 9 | 9 | 9 | 9 |
| Rimar | wt% | 0.4 | 0.4 | 0.4 | | | |
| KSS | wt% | | | | 0.5 | 0.5 | 0.5 |
| NaTS | wt% | | | | 0.15 | 0.15 | 0.15 |
| PETS | wt% | 0.3 | 0.3 | 0.3 | 0.3 | 0.3 | 0.3 |
| Phosphite | wt% | 0.05 | 5% | 5% | 5% | 0.05 | 0.05 |
| UVA | wt% | 0.15 | 0.15 | 0.15 | 0.15 | 0.15 | 0.15 |
| TiO₂ | wt% | 3 | 3 | 3 | 3 | 3 | |
| Property | | | | | | | |
| Vicat (50 N, 120°C/min) | °C | 154.3 | 154.4 | 155.2 | 154.4 | 154.2 | 155.4 |
| INI Impact (23°C) | kJ/m² | 13.9 | 15.3 | 15.6 | 13.9 | 14.6 | 14.6 |
| Ductility (23°C) | % | 100 | 80 | 40 | 80 | 100 | 80 |
| | | | | | | | |
| pFTP (V2) | - | 0.96 | 0.98 | 0.92 | 0.98 | 0.76 | 0.95 |

As shown in Table 11, when Rimar salt alone was used, a good balance of heat/impact and flammability was seen (Ex. 49-51), even in the absence of TSAN. A good balance of impact and flame retardant properties was also achieved with a combination of KSS and NaTS, even in the absence of TSAN.

The compositions, and articles of the instant invention can alternatively comprise, consist of, or consist essentially of, any appropriate components herein disclosed. The compositions and articles of the instant invention can additionally, or alternatively, be formulated so as to be devoid, or substantially free, of any components, materials, ingredients, adjuvants, or species that are otherwise not necessary to the achievement of the function or objectives of the compositions, and articles.

This disclosure further encompasses the following embodiments.

Embodiment 1. An article, preferably a housing for an electrical component, comprising a polycarbonate composition, comprising
8-55 weight percent of a bisphenol A homopolycarbonate having a weight average molecular weight from 15,000-40,000 grams/mole measured via gel permeation chromatography using bisphenol A homopolycarbonate standards; 10-25 weight percent of a polycarbonate-siloxane); 20-50 weight percent of a high heat polycarbonate copolymer having a glass transition temperature of 170°C or higher and comprising at least one of a high heat copolymer having carbonate units derived from bisphenol A and a high heat aromatic dihydroxy compound, preferably a phthalimidine carbonate unit, or a poly(phthalate ester-carbonate), preferably comprising ester units derived from bisphenol A and terephthalic, isophthalic, or phthalic acid, or a combination comprising at least one of the foregoing diacids, and carbonate units derived from bisphenol A; 0.1-0.7 weight percent of a flame retardant salt; 5-15 weight percent of glass fibers; 0-0.2 weight percent of an anti-drip agent; optionally, up to 10 weight percent of an additive composition; wherein the polycarbonate composition comprises 2-4 weight percent of siloxane, and a molded sample of the polycarbonate composition has a Vicat B120 softening temperature of at least 150°C, preferably from 155 to 165°C, measured according to ISO 306, an Izod notched impact strength of greater than or equal to 10 kilojoules per square meter measured at 23°C according to ISO 180/1 A, a flame test rating, when measured according to UL-94 at 0.8 millimeters (mm) thickness, of V2, and a probability of first time pass for V2 greater than 0.7; wherein each amount is based on the total weight of the polycarbonate composition, which sums to 100 weight percent.

Embodiment 2. The article of Embodiment 1, wherein the article is a molded housing.

Embodiment 3. The article of Embodiment 1 or 2, wherein the article is an electrical circuit housing.

Embodiment 4. The article of any one or more of the preceding Embodiments, wherein the article is a molded article, a thermoformed article, an extruded film, an extruded sheet, a foamed article, a layer of a multi-layer article, a substrate for a coated article, or a substrate for a metallized article.

Embodiment 5. The article of any one or more of the preceding Embodiments, wherein the polycarbonate composition comprises a bisphenol A homopolycarbonate; the high heat copolycarbonate comprises at least one of a copolymer having carbonate units derived from bisphenol A and phthalimidine carbonate units, or the poly(phthalate ester-carbonate) comprising ester units derived from bisphenol A and terephthalic, isophthalic, or phthalic acid, or a combination comprising at least one of the foregoing diacids, and carbonate units derived from bisphenol A; the flame retardant salt is a C₂₋₁₆ alkyl sulfonate, preferably potassium perfluoroctane sulfonate, potassium perfluoroctane sulfonate, or tetraethylammonium perfluorohexane sulfonate, a salt of an aromatic sulfonates preferably sodium benzene sulfonate or sodium toluene sulfonate, a salt of an aromatic sulfone sulfonate, preferably a potassium diphenylsulfone sulfonate, a salt formed by reacting for example an alkali metal or alkaline earth metal and an inorganic acid complex salt, preferably an alkali metal or alkaline earth metal salt of carbonic acid or a fluoro-anion complex such as Li₃AlF₆, BaSiF₆, KBF₄, K₃AlF₆, KAlF₄, K₂SiF₆, or Na₃AlF₆; and the anti-drip agent is styrene-acrylonitrile-encapsulated poly(tetrafluoroethylene) copolymer.

Embodiment 6. The article of any one or more of the preceding Embodiments, wherein the high heat copolycarbonate comprises 20-30 weight percent of a high heat copolymer of bisphenol-A and phthalimidine.

Embodiment 7. The article of any one or more of the preceding Embodiments, wherein the high heat copolycarbonate comprises 40-60 weight percent of a high heat copolymer of a poly(phthalate ester-carbonate).

Embodiment 8. The article of any one or more of the preceding Embodiments, wherein the flame retardant salt is potassium perfluorobutane sulfonate, potassium diphenylsulfone sulfonate, sodium toluene sulfonate, or a combination comprising at least one of the foregoing.

Embodiment 9. The article of any one or more of the preceding Embodiments, wherein the flame retardant salt comprises 0.1-1.0 weight percent of a C₂₋₁₆ alkyl sulfonate.

Embodiment 10. The article of Embodiment 9, wherein the flame retardant salt is potassium perfluoroctane sulfonate, potassium perfluorobutane sulfonate, tetraethylammonium perfluorohexane sulfonate, or a combination comprising at least one of the foregoing.

Embodiment 11. The article of any one or more of the preceding Embodiments, wherein the flame retardant salt comprises a total of 0.2-0.7 weight percent of a salt of an aromatic sulfone sulfonate.

Embodiment 12. The article of Embodiment 11, wherein the flame retardant salt is sodium benzene sulfonate, sodium toluene sulfonate , a potassium diphenylsulfone sulfonate, or a combination comprising at least one of the foregoing.

Embodiment 13. The article of any one or more of the preceding Embodiments, wherein the flame retardant salt does not contain phosphorous, or wherein the polycarbonate composition does not contain an anti-drip agent, an acrylonitrile-butadiene-styrene copolymer or a methyl methacrylate-butadiene-styrene copolymer, or a combination thereof.

Embodiment 14. The article of any one or more of the preceding Embodiments, comprising 45-55 weight percent of a polycarbonate having a molecular weight from 20,000-25,000 grams/mole; 10-20 weight percent of a poly(carbonate-siloxane) copolymer containing 15-25 weight percent siloxane; 20-30 weight percent of a high heat copolymer of bisphenol-A and phthalimidine, or 40-60 weight percent of a high heat copolymer of a poly(phthalate ester-carbonate); 0.3-0.8 weight percent of potassium perfluorobutane sulfonate, potassium diphenylsulfone sulfonate, sodium toluene sulfonate, or a combination comprising at least one of the foregoing; 8-12 weight percent of glass fibers; 0.01-1.0 weight percent of a phosphite heat stabilizer; less than 0.15 weight percent of an anti-drip agent; wherein a molded sample of the polycarbonate composition has a Vicat B50 softening temperature of at least 150°C, preferably from 155 to 165°C, measured according to ISO 306, an Izod notched impact strength of greater than or equal to 10 kilojoules per square meter, measured at 23°C according to ISO 180/1 A, and a flame test rating of at least V2, measured according to UL-94 at 0.8 millimeters thickness.

Embodiment 15. A polycarbonate composition, comprising 8 to 55 weight percent of a bisphenol A homopolycarbonate having a weight average molecular weight from 15,000-40,000 grams/mole measured via gel permeation chromatography using bisphenol A homopolycarbonate standards; 10-25 weight percent of a poly(carbonate-siloxane); 20-50 weight percent of a high heat polycarbonate copolymer having a glass transition temperature of 170°C or higher and comprising at least one of a high heat copolymer having carbonate units derived from bisphenol A and a high heat aromatic dihydroxy compound, preferably a phthalimidine carbonate unit, or a poly(phthalate ester-carbonate), preferably comprising ester units derived from bisphenol A and terephthalic, isophthalic, or phthalic acid, or a combination comprising at least one of the foregoing diacids, and carbonate units derived from bisphenol A; 0.1-0.7 weight percent of a flame retardant salt; 5-15 weight percent of glass fibers; 0-0.2 weight percent of an anti-drip agent; optionally, up to 10 weight percent of an additive composition, wherein the polycarbonate composition comprises 2-4 weight percent of siloxane.

The singular forms "a," "an," and "the" include plural referents unless the context clearly dictates otherwise. "Or" means "and/or" unless clearly indicated otherwise by context. The modifier "about" used in connection with a quantity is inclusive of the stated value (e.g., "about 25-50 wt%" is a disclosure of "25-50 wt%") and has the meaning dictated by the context (e.g., includes the degree of error associated with measurement of the particular quantity). The endpoints of all ranges directed to the same component or property are inclusive and independently combinable (e.g., ranges of "less than or equal to 25 wt%, or 5 wt% to 20 wt%," is inclusive of the endpoints and all intermediate values of the ranges of "5 wt% to 25 wt%," etc.). Disclosure of a narrower range or more specific group in addition to a broader range is not a disclaimer of the broader range or larger group.

The suffix "(s)" is intended to include both the singular and the plural of the term that it modifies, thereby including at least one of that term (e.g., the filler(s) includes at least one filler). "Optional" or "optionally" means that the subsequently described event or circumstance may or may not occur, and that the description includes instances where the event occurs and instances where it does not. Unless defined otherwise, technical and scientific terms used herein have the same meaning as is commonly understood by one of skill in the art to which this disclosure belongs. A "combination" is inclusive of blends, mixtures, alloys, reaction products, and the like. The terms "first," "second," and the like, "primary," "secondary," and the like, as used herein do not denote any order, quantity, or importance, but rather are used to distinguish one element from another.

As used herein, the term "hydrocarbyl" and "hydrocarbon" refers broadly to a substituent comprising carbon and hydrogen, optionally with 1-3 heteroatoms, for example, oxygen, nitrogen, halogen, silicon, sulfur, or a combination thereof; "alkyl" refers to a straight or branched chain, saturated monovalent hydrocarbon group; "alkylene" refers to a straight or branched chain, saturated, divalent hydrocarbon group; "alkylidene" refers to a straight or branched chain, saturated divalent hydrocarbon group, with both valences on a single common carbon atom; "alkenyl" refers to a straight or branched chain monovalent hydrocarbon group having at least two carbons joined by a carbon-carbon double bond; "cycloalkyl" refers to a non-aromatic monovalent monocyclic or multicylic hydrocarbon group having at least three carbon atoms, "cycloalkenyl" refers to a non-aromatic cyclic divalent hydrocarbon group having at least three carbon atoms, with at least one degree of unsaturation; "aryl" refers to an aromatic monovalent group containing only carbon in the aromatic ring or rings; "arylene" refers to an aromatic divalent group containing only carbon in the aromatic ring or rings; "alkylaryl" refers to an aryl group that has been substituted with an alkyl group as defined above, with 4-methylphenyl being an exemplary alkylaryl group; "arylalkyl" refers to an alkyl group that has been substituted with an aryl group as defined above, with benzyl being an exemplary arylalkyl group; "acyl" refers to an alkyl group as defined above with the indicated number of carbon atoms attached through a carbonyl carbon bridge (-C(=O)-); "alkoxy" refers to an alkyl group as defined above with the indicated number of carbon atoms attached through an oxygen bridge (-O-); and "aryloxy" refers to an aryl group as defined above with the indicated number of carbon atoms attached through an oxygen bridge (-O-).

Unless otherwise indicated, each of the foregoing groups can be unsubstituted or substituted, provided that the substitution does not significantly adversely affect synthesis, stability, or use of the compound. The term "substituted" as used herein means that at least one hydrogen on the designated atom or group is replaced with another group, provided that the designated atom's normal valence is not exceeded. When the substituent is oxo (i.e., =O), then two hydrogens on the atom are replaced. Combinations of substituents or variables are permissible provided that the substitutions do not significantly adversely affect synthesis or use of the compound. Exemplary groups that can be present on a "substituted" position include, but are not limited to, cyano; hydroxyl; nitro; azido; alkanoyl (such as a C2-6 alkanoyl group such as acyl); carboxamido; C1-6 or C1-3 alkyl, cycloalkyl, alkenyl, and alkynyl (including groups having at least one unsaturated linkages and from 2-8, or 2-6 carbon atoms); C1-6 or C1-3 alkoxys; C6-10 aryloxy such as phenoxy; C1-6 alkylthio; C1-6 or C1-3 alkylsulfinyl; C1-6 or C1-3 alkylsulfonyl; aminodi(C1-6 or C1-3)alkyl; C6-12 aryl having at least one aromatic rings (e.g., phenyl, biphenyl, naphthyl, or the like, each ring either substituted or unsubstituted aromatic); C7-19 arylalkyl having 1-3 separate or fused rings and from 6-18 ring carbon atoms; or arylalkoxy having 1-3 separate or fused rings and from 6-18 ring carbon atoms, with benzyloxy being an exemplary arylalkoxy.

## Claims

1. An article comprising a polycarbonate composition, comprising
8-55 weight percent of a bisphenol A homopolycarbonate having a weight average molecular weight from 15,000-40,000 grams/mole measured via gel permeation chromatography using bisphenol A homopolycarbonate standards;
10-25 weight percent of a poly(carbonate-siloxane);
20-50 weight percent of a high heat polycarbonate copolymer having a glass transition temperature of 170°C or higher and comprising at least one of
a high heat copolymer having carbonate units derived from bisphenol A and a high heat aromatic dihydroxy compound, preferably a phthalimidine carbonate unit, or
a poly(phthalate ester-carbonate), preferably comprising ester units derived from bisphenol A and terephthalic, isophthalic, or phthalic acid, or a combination comprising at least one of the foregoing diacids, and carbonate units derived from bisphenol A;
0.1-0.7 weight percent of a flame retardant salt;
5-15 weight percent of glass fibers;
0-0.2 weight percent of an anti-drip agent;
optionally, up to 10 weight percent of an additive composition;
wherein the polycarbonate composition comprises 2-4 weight percent of siloxane, and
a molded sample of the polycarbonate composition has
a Vicat B120 softening temperature of at least 150°C, measured according to ISO 306,
an Izod notched impact strength of greater than or equal to 10 kilojoules per square meter measured at 23°C according to ISO 180/1 A,
a flame test rating, when measured according to UL-94 at 0.8 millimeters thickness, of V2, and
a probability of first time pass for V2 greater than 0.7, measured as indicated in the specification;
wherein each amount is based on the total weight of the polycarbonate composition, which sums to 100 weight percent.

2. The article of claim 1, wherein the article is a molded housing.

3. The article of claim 1 or 2, wherein the article is an electrical circuit housing.

4. The article of any one or more of the preceding claims, wherein the article is a molded article, a thermoformed article, an extruded film, an extruded sheet, a foamed article, a layer of a multi-layer article, a substrate for a coated article, or a substrate for a metallized article.

5. The article of any one or more of the preceding claims, wherein
the polycarbonate composition comprises a bisphenol A homopolycarbonate;
the high heat copolycarbonate comprises at least one of
the copolymer having carbonate units derived from bisphenol A and phthalimidine carbonate units, or
the poly(phthalate ester-carbonate) comprising ester units derived from bisphenol A and terephthalic, isophthalic, or phthalic acid, or a combination comprising at least one of the foregoing diacids, and carbonate units derived from bisphenol A;
the flame retardant salt is
a C₂₋₁₆ alkyl sulfonate, preferably potassium perfluoroctane sulfonate, potassium perfluoroctane sulfonate, or tetraethylammonium perfluorohexane sulfonate,
a salt of an aromatic sulfonates preferably sodium benzene sulfonate or sodium toluene sulfonate,
a salt of an aromatic sulfone sulfonate, preferably a potassium diphenylsulfone sulfonate,
a salt formed by reacting for example an alkali metal or alkaline earth metal and an inorganic acid complex salt, preferably an alkali metal or alkaline earth metal salt of carbonic acid or a fluoro-anion complex such as Li₃AlF₆, BaSiF₆, KBF₄, K₃AlF₆, KAIF₄, K₂SiF₆, or Na₃AlF₆; and
the anti-drip agent is styrene-acrylonitrile-encapsulated poly(tetrafluoroethylene) copolymer.

6. The article of any one or more of the preceding claims, wherein the high heat copolycarbonate comprises 20-30 weight percent of a high heat copolymer of bisphenol-A and phthalimidine.

7. The article of any one or more of the preceding claims, wherein the high heat copolycarbonate comprises 40-60 weight percent of a high heat copolymer of a poly(phthalate ester-carbonate).

8. The article of any one or more of the preceding claims, wherein the flame retardant salt is potassium perfluorobutane sulfonate, potassium diphenylsulfone sulfonate, sodium toluene sulfonate, or a combination comprising at least one of the foregoing.

9. The article of any one or more of the preceding claims, wherein the flame retardant salt comprises 0.1-1.0 weight percent of a C₂₋₁₆ alkyl sulfonate.

10. The article of claim 9, wherein the flame retardant salt is potassium perfluoroctane sulfonate, potassium perfluorobutane sulfonate, tetraethylammonium perfluorohexane sulfonate, or a combination comprising at least one of the foregoing.

11. The article of any one or more of the preceding claims, wherein the flame retardant salt comprises a total of 0.2-0.7 weight percent of a salt of an aromatic sulfone sulfonate.

12. The article of claim 11, wherein the flame retardant salt is sodium benzene sulfonate, sodium toluene sulfonate, a potassium diphenylsulfone sulfonate, or a combination comprising at least one of the foregoing.

13. The article of any one or more of the preceding claims, wherein the flame retardant salt does not contain phosphorous, an anti-drip agent, an acrylonitrile-butadiene-styrene copolymer or a methyl methacrylate-butadiene-styrene copolymer, or a combination thereof.

14. The article of any one or more of the preceding claims, comprising
45-55 weight percent of a polycarbonate having a molecular weight from 20,000-25,000 grams/mole;
10-20 weight percent of a poly(carbonate-siloxane) copolymer containing 15-25 weight percent siloxane;
20-30 weight percent of a high heat copolymer of bisphenol-A and phthalimidine, or 40-60 weight percent of a high heat copolymer of a poly(phthalate ester-carbonate);
0.3-0.8 weight percent of potassium perfluorobutane sulfonate, potassium diphenylsulfone sulfonate, sodium toluene sulfonate, or a combination comprising at least one of the foregoing;
8-12 weight percent of glass fibers;
0.01-1.0 weight percent of a phosphite heat stabilizer;
less than 0.15 weight percent of an anti-drip agent;
wherein a molded sample of the polycarbonate composition has
a Vicat B50 softening temperature of at least 150°C, measured according to ISO 306,
an Izod notched impact strength of greater than or equal to 10 kilojoules per square meter, measured at 23°C according to ISO 180/1 A, and
a flame test rating of at least V2, measured according to UL-94 at 0.8 millimeters thickness.

15. A polycarbonate composition, comprising
8 to 55 weight percent of a bisphenol A homopolycarbonate having a weight average molecular weight from 15,000-40,000 grams/mole measured via gel permeation chromatography using bisphenol A homopolycarbonate standards;
10-25 weight percent of a poly(carbonate-siloxane);
20-50 weight percent of a high heat polycarbonate copolymer having a glass transition temperature of 170°C or higher and comprising at least one of
a high heat copolymer having carbonate units derived from bisphenol A and a high heat aromatic dihydroxy compound, preferably a phthalimidine carbonate unit, or
a poly(phthalate ester-carbonate), preferably comprising ester units derived from bisphenol A and terephthalic, isophthalic, or phthalic acid, or a combination comprising at least one of the foregoing diacids, and carbonate units derived from bisphenol A;
0.1-0.7 weight percent of a flame retardant salt;
5-15 weight percent of glass fibers;
0-0.2 weight percent of an anti-drip agent;
optionally, up to 10 weight percent of an additive composition,
wherein the polycarbonate composition comprises 2-4 weight percent of siloxane.

## Patentansprüche

1. Ein Gegenstand, der eine Polycarbonatzusammensetzung umfasst, die Folgendes umfasst:
8-55 Gewichtsprozent eines Bisphenol-A-Homopolycarbonats, das ein Gewichtsmittel-Molekulargewicht von 15.000-40.000 Gramm/mol hat, gemessen durch Gelpermeationschromatographie unter Anwendung von Bisphenol-A-Homopolycarbonatstandards;
10-25 Gewichtsprozent eines Poly(carbonat-siloxans);
20-50 Gewichtsprozent eines Hochtemperatur-Polycarbonatcopolymers mit einer Glasübergangstemperatur von 170° oder höher, das mindestens eines von Folgendem umfasst:
einem Hochtemperatur-Copolymer mit Carbonateinheiten, abgeleitet von Bisphenol-A und einer aromatischen Hochtemperatur-Dihydroxyverbindung, vorzugsweise eine Phthalimidincarbonateinheit oder ein Poly(phthalatester-carbonat), vorzugsweise Estereinheiten umfassend, die abgeleitet sind von Bisphenol-A und Terephthal-, Isophthal- oder Phthalsäure oder einer Kombination, die mindestens eine der oben genannten zweiwertigen Säuren umfasst, und Carbonateinheiten, die von Bisphenol-A abgeleitet sind;
0,1-0,7 Gewichtsprozent eines Flammverzögerungssalzes;
5-15 Gewichtsprozent Glasfasern;
0-0,2 Gewichtsprozent eines Antitropfmittels;
wahlweise bis zu 10 Gewichtsprozent einer Zusatzzusammensetzung;
wobei die Polycarbonatzusammensetzung 2-4 Gewichtsprozent Siloxan umfasst und eine geformte Probe der Polycarbonatzusammensetzung Folgendes hat:
eine Vicat B120-Erweichungstemperatur von mindestens 150°C, gemessen nach ISO 306,
eine Izod-Kerbschlagzähigkeit von mindestens 10 Kilojoules pro Quadratmeter, gemessen bei 23°C nach ISO 180/1 A,
einen Flammtest-Wert, gemessen nach UL-94 bei 0,8 Millimetern Dicke, von V2 und
eine Wahrscheinlichkeit des Erreichens eines Werts von V2 beim ersten Durchlauf von mehr als 0,7, gemessen wie in der Spezifikation angegeben;
wobei alle Mengen auf dem Gesamtgewicht der Polycarbonatzusammensetzung basieren und in Summe 100 Gewichtsprozent ergeben.

2. Der Gegenstand gemäß Anspruch 1, wobei der Gegenstand ein geformtes Gehäuse ist.

3. Der Gegenstand gemäß Anspruch 1 oder 2, wobei der Gegenstand ein Schaltkreisgehäuse ist.

4. Der Gegenstand gemäß einem oder mehreren der obigen Ansprüche, wobei der Gegenstand ein Formteil, ein wärmegeformter Gegenstand, eine extrudierte Folie, eine extrudierte Platte, ein geschäumter Gegenstand, eine Schicht eines mehrschichtigen Gegenstands, ein Substrat für einen beschichteten Gegenstand oder ein Substrat für einen metallisierten Gegenstand ist.

5. Der Gegenstand gemäß einem oder mehreren der obigen Ansprüche, wobei
die Polycarbonatzusammensetzung ein Bisphenol-A-Homopolycarbonat umfasst;
das Hochtemperatur-Copolycarbonat mindestens eines von Folgendem umfasst:
dem Copolymer, das Carbonateinheiten hat, abgeleitet von Bisphenol-A und Phthalimidincarbonateinheiten, oder
dem Poly(phthalatester-carbonat), das Estereinheiten umfasst, die von Bisphenol-A und Terephthal-, Isophthal- oder Phthalsäure oder einer Kombination abgeleitet sind, die mindestens eine der oben genannten zweiwertigen Säuren umfasst, und von Bisphenol-A abgeleitete Carbonateinheiten;
das Flammverzögerungssalz Folgendes ist:
ein C₂-₁₆-Alkylsulfonat, vorzugsweise Kaliumperfluoroctansulfonat oder Tetraethylammoniumperfluorhexansulfonat,
ein Salz eines aromatischen Sulfonats, vorzugsweise Natriumbenzensulfonat oder Natriumtoluensulfonat,
ein Salz eines aromatischen Sulfonsulfonats, vorzugsweise eines Kaliumdiphenylsulfonsulfonats,
ein Salz, geformt durch Reagieren, zum Beispiel, eines Alkalimetalls oder Erdalkalimetalls und eines anorganischen Säurekomplexsalzes, vorzugsweise ein Alkalimetall- oder Erdalkalimetallsalz von Carbonsäure oder ein Fluor-Anion-Komplex, wie zum Beispiel Li₃AlF₆, BaSiF₆, KBF₄, K₃AlF₆, KAlF₄, K₂SiF₆ oder Na₃AlF₆; und
das Antitropfmittel Styren-Acrylonitril-verkapseltes Poly(tetrafluorethylen)copolymer ist.

6. Der Gegenstand gemäß einem oder mehreren der obigen Ansprüche, wobei das Hochtemperatur-Copolycarbonat 20-30 Gewichtsprozent eines Hochtemperatur-Copolymers von Bisphenol-A und Phthalimidin umfasst.

7. Der Gegenstand gemäß einem oder mehreren der obigen Ansprüche, wobei das Hochtemperatur-Copolycarbonat 40-60 Gewichtsprozent eines Hochtemperatur-Copolymers eines Poly(phthalatester-carbonats) umfasst.

8. Der Gegenstand gemäß einem oder mehreren der obigen Ansprüche, wobei das Flammverzögerungssalz Kaliumperfluorbutansulfonat, Kaliumdiphenylsulfonsulfonat, Natriumtoluensulfonat oder eine Kombination ist, die mindestens eines der oben Genannten umfasst.

9. Der Gegenstand gemäß einem oder mehreren der obigen Ansprüche, wobei das Flammverzögerungssalz 0,1-1,0 Gewichtsprozent eines C₂-₁₆-Alkylsulfonats umfasst.

10. Der Gegenstand gemäß Anspruch 9, wobei das Flammverzögerungssalz Kaliumperfluoroctansulfonat, Kaliumperfluorbutansulfonat, Tetraethylammoniumperfluorhexansulfonat oder eine Kombination ist, die mindestens eines der oben Genannten umfasst.

11. Der Gegenstand gemäß einem oder mehreren der obigen Ansprüche, wobei das Flammverzögerungssalz insgesamt 0,2-0,7 Gewichtsprozent eines Salzes eines aromatischen Sulfonsulfonats umfasst.

12. Der Gegenstand gemäß Anspruch 11, wobei das Flammverzögerungssalz Natriumbenzensulfonat, Natriumtoluensulfonat, ein Kaliumdiphenylsulfonsulfonat oder eine Kombination ist, die mindestens eines der oben Genannten umfasst.

13. Der Gegenstand gemäß einem oder mehreren der obigen Ansprüche, wobei das Flammverzögerungssalz nicht Phosphor, ein Antitropfmittel, ein Acrylonitril-Butadien-Styren-Copolymer oder ein Methylmethacrylat-Butadien-Styren-Copolymer oder eine Kombination davon enthält.

14. Der Gegenstand gemäß einem oder mehreren der obigen Ansprüche, der Folgendes umfasst:
45-55 Gewichtsprozent eines Polycarbonats mit einem Molekulargewicht von 20.000-25.000 Gramm/mol;
10-20 Gewichtsprozent eines Poly(carbonat-siloxan)copolymers, das 15-25 Gewichtsprozent Siloxan enthält;
20-30 Gewichtsprozent eines Hochtemperatur-Copolymers von Bisphenol-A und Phthalimidin oder 40-60 Gewichtsprozent eines Hochtemperatur-Copolymers eines Poly(phthalatester-carbonats);
0,3-0,8 Gewichtsprozent Kaliumperfluorbutansulfonat, Kaliumdiphenylsulfonsulfonat, Natriumtoluensulfonat oder einer Kombination, die mindestens eines der oben Genannten umfasst;
8-12 Gewichtsprozent Glasfasern;
0,01-1,0 Gewichtsprozent eines Phosphit-Wärmestabilisators;
weniger als 0,15 Gewichtsprozent eines Antitropfmittels;
wobei eine geformte Probe der Polycarbonatzusammensetzung Folgendes hat:
eine Vicat B50-Erweichungstemperatur von mindestens 150°C, gemessen nach ISO 306,
eine Izod-Kerbschlagzähigkeit von mindestens 10 Kilojoules pro Quadratmeter, gemessen bei 23°C nach ISO 180/l A, und
einen Flammtest-Wert von mindestens V2, gemessen nach UL-94 bei 0,8 Millimetern Dicke.

15. Eine Polycarbonatzusammensetzung, die Folgendes umfasst:
8 bis 55 Gewichtsprozent eines Bisphenol-A-Homopolycarbonats mit einem Gewichtsmittel-Molekulargewicht von 15.000-40.000 Gramm/mol, gemessen durch Gelpermeationschromatographie unter Anwendung von Bisphenol-A-Homopolycarbonatstandards;
10-25 Gewichtsprozent eines Poly(carbonat-siloxans);
20-50 Gewichtsprozent eines Hochtemperatur-Polycarbonatcopolymers mit einer Glasübergangstemperatur von 170°C oder höher, das mindestens eines von Folgendem umfasst:
einem Hochtemperatur-Copolymer mit Carbonateinheiten, abgeleitet von Bisphenol-A und einer aromatischen Hochtemperatur-Dihydroxyverbindung, vorzugsweise eine Phthalimidincarbonateinheit oder ein Poly(phthalatester-carbonat), vorzugsweise Estereinheiten umfassend, die abgeleitet sind von Bisphenol-A und Terephthal-, Isophthal- oder Phthalsäure oder einer Kombination, die mindestens eine der oben genannten zweiwertigen Säuren umfasst, und Carbonateinheiten, die von Bisphenol-A abgeleitet sind;
0,1-0,7 Gewichtsprozent eines Flammverzögerungssalzes;
5-15 Gewichtsprozent Glasfasern;
0-0,2 Gewichtsprozent eines Antitropfmittels;
wahlweise bis zu 10 Gewichtsprozent einer Zusatzzusammensetzung;
wobei die Polycarbonatzusammensetzung 2-4 Gewichtsprozent Siloxan umfasst.

## Revendications

1. Article comprenant une composition de polycarbonate, comprenant
de 8 à 55 % en poids d'un homopolycarbonate de bisphénol A ayant un poids moléculaire moyen en poids de 15 000 à 40 000 grammes/mole mesuré par chromatographie par perméation de gel en utilisant des étalons d'homopolycarbonate de bisphénol A ;
de 10 à 25 % en poids d'un poly(carbonate-siloxane) ;
de 20 à 50 % en poids d'un copolymère de polycarbonate hautement résistant à la chaleur ayant une température de transition vitreuse de 170 °C ou plus et comprenant au moins l'un parmi
un copolymère hautement résistant à la chaleur ayant des motifs carbonate dérivés du bisphénol A et d'un composé dihydroxy aromatique hautement résistant à la chaleur, de préférence un motif carbonate de phtalimidine, ou
un poly(ester de phtalate-carbonate), comprenant de préférence des motifs ester dérivés du bisphénol A et de l'acide téréphtalique, isophtalique ou phtalique, ou d'une combinaison comprenant au moins un des diacides précédents, et des motifs carbonate dérivés du bisphénol A ;
de 0,1 à 0,7 % en poids d'un sel ignifuge ;
de 5 à 15 % en poids de fibres de verre ;
de 0 à 0,2 % en poids d'un agent anti-goutte ;
éventuellement, jusqu'à 10 % en poids d'une composition d'additifs ;
dans lequel la composition de polycarbonate comprend de 2 à 4 % en poids de siloxane, et
un échantillon moulé de la composition de polycarbonate possède
une température de ramollissement Vicat B120 d'au moins 150 °C, mesurée selon la norme ISO 306,
une résistance aux chocs Izod sur barreau entaillé supérieure ou égale à 10 kilojoules par mètre carré, mesurée à 23 °C selon la norme ISO 180/1 A,
un indice d'inflammabilité, lorsqu'il est mesuré selon la norme UL-94 à 0,8 millimètre d'épaisseur, de V2, et
une probabilité de réussite du premier coup pour V2 supérieure à 0,7, mesurée comme indiqué dans la description;
dans lequel chaque quantité est basée sur le poids total de la composition de polycarbonate, qui correspond à un total de 100 % en poids.

2. Article selon la revendication 1, dans lequel l'article est un boîtier moulé.

3. Article selon la revendication 1 ou 2, dans lequel l'article est un boîtier de circuit électrique.

4. Article selon l'une quelconque ou plusieurs des revendications précédentes, dans lequel l'article est un article moulé, un article thermoformé, un film extrudé, une feuille extrudée, un article en mousse, une couche d'un article multicouche, un substrat pour un article enduit ou un substrat pour un article métallisé.

5. Article selon l'une quelconque ou plusieurs des revendications précédentes, dans lequel
la composition de polycarbonate comprend un homopolycarbonate de bisphénol A ;
le copolycarbonate hautement résistant à la chaleur comprend au moins l'un parmi
le copolymère ayant des motifs carbonate dérivés du bisphénol A et des motifs carbonate de phtalimidine, ou
le poly(ester de phtalate-carbonate), comprenant des motifs ester dérivés du bisphénol A et de l'acide téréphtalique, isophtalique ou phtalique, ou d'une combinaison comprenant au moins un des diacides précédents, et des motifs carbonate dérivés du bisphénol A ;
le sel ignifuge est
un sulfonate d'alkyle en C₂-₁₆, de préférence le sulfonate de perfluorooctane de potassium, le sulfonate de perfluorooctane de potassium ou le sulfonate de perfluorohexane de tétraéthylammonium,
un sel d'un sulfonate aromatique, de préférence le sulfonate de benzène de sodium ou le sulfonate de toluène de sodium,
un sel d'un sulfonate de sulfone aromatique, de préférence un sulfonate de diphénylsulfone de potassium,
un sel formé par réaction par exemple d'un métal alcalin ou alcalino-terreux et d'un sel complexe d'acide inorganique, de préférence d'un sel de métal alcalin ou alcalino-terreux d'acide carbonique ou d'un complexe fluoro-anionique tel que Li₃AlF₆, BaSiF₆, KBF₄, K₃AlF₆, KAlF₄, K₂SiF₆ ou Na₃AlF₆ ; et
l'agent anti-goutte est un copolymère de styrène-acrylonitrile-poly(tétrafluoroéthylène) encapsulé.

6. Article selon l'une quelconque ou plusieurs des revendications précédentes, dans lequel le copolycarbonate hautement résistant à la chaleur comprend de 20 à 30 % en poids d'un copolymère hautement résistant à la chaleur de bisphénol A et de phtalimidine.

7. Article selon l'une quelconque ou plusieurs des revendications précédentes, dans lequel le copolycarbonate hautement résistant à la chaleur comprend de 40 à 60 % en poids d'un copolymère hautement résistant à la chaleur d'un poly(ester de phtalate-carbonate).

8. Article selon l'une quelconque ou plusieurs des revendications précédentes, dans lequel le sel ignifuge est le sulfonate de perfluorobutane de potassium, le sulfonate de diphénylsulfone de potassium, le sulfonate de toluène de sodium ou une combinaison comprenant au moins l'un des précédents.

9. Article selon l'une quelconque ou plusieurs des revendications précédentes, dans lequel le sel ignifuge comprend de 0,1 à 1,0 % en poids d'un sulfonate d'alkyle en C₂₋₁₆.

10. Article selon la revendication 9, dans lequel le sel ignifuge est le sulfonate de perfluorooctane de potassium, le sulfonate de perfluorobutane de potassium, le sulfonate de perfluorohexane de tétraéthylammonium ou une combinaison comprenant au moins l'un des précédents.

11. Article selon l'une quelconque ou plusieurs des revendications précédentes, dans lequel le sel ignifuge comprend un total de 0,2 à 0,7 % en poids d'un sel d'un sulfonate de sulfone aromatique.

12. Article selon la revendication 11, dans lequel le sel ignifuge est le sulfonate de benzène de sodium, le sulfonate de toluène de sodium, le sulfonate de diphénylsulfone de potassium ou une combinaison comprenant au moins l'un des précédents.

13. Article selon l'une quelconque ou plusieurs des revendications précédentes, dans lequel le sel ignifuge ne contient pas de phosphore, un agent anti-goutte, un copolymère d'acrylonitrile-butadiène-styrène ou un copolymère de méthacrylate de méthyle-butadiène-styrène, ou une combinaison de ceux-ci.

14. Article selon l'une quelconque ou plusieurs des revendications précédentes, comprenant
de 45 à 55 % en poids d'un polycarbonate ayant un poids moléculaire de 20 000 à 25 000 grammes/mole ;
de 10 à 20 % en poids d'un copolymère de poly(carbonate-siloxane) contenant de 15 à 25 % en poids de siloxane ;
de 20 à 30 % en poids d'un copolymère hautement résistant à la chaleur de bisphénol A et de phtalimidine, ou de 40 à 60 % en poids d'un copolymère hautement résistant à la chaleur d'un poly(ester de phtalate -carbonate) ;
de 0,3 à 0,8 % en poids de sulfonate de perfluorobutane de potassium, de sulfonate de diphénylsulfone de potassium, de sulfonate de toluène de sodium ou d'une combinaison comprenant au moins l'un des précédents ;
de 8 à 12 % en poids de fibres de verre ;
de 0,01 à 1,0 % en poids d'un stabilisant thermique à base de phosphite ;
moins de 0,15 % en poids d'un agent anti-goutte ;
dans lequel un échantillon moulé de la composition de polycarbonate possède
une température de ramollissement Vicat B50 d'au moins 150 °C, mesurée selon la norme ISO 306,
une résistance aux chocs Izod sur barreau entaillé supérieure ou égale à 10 kilojoules par mètre carré, mesurée à 23 °C selon la norme ISO 180/1 A, et
un indice d'inflammabilité d'au moins V2, mesuré selon la norme UL-94 à 0,8 millimètre d'épaisseur.

15. Composition de polycarbonate, comprenant
de 8 à 55 % en poids d'un homopolycarbonate de bisphénol A ayant un poids moléculaire moyen en poids de 15 000 à 40 000 grammes/mole mesuré par chromatographie par perméation de gel en utilisant des étalons d'homopolycarbonate de bisphénol A ;
de 10 à 25 % en poids d'un poly(carbonate-siloxane) ;
de 20 à 50 % en poids d'un copolymère de polycarbonate hautement résistant à la chaleur ayant une température de transition vitreuse de 170 °C ou plus et comprenant au moins l'un parmi
un copolymère hautement résistant à la chaleur ayant des motifs carbonate dérivés du bisphénol A et d'un composé dihydroxy aromatique hautement résistant à la chaleur, de préférence un motif carbonate de phtalimidine, ou
un poly(ester de phtalate-carbonate), comprenant de préférence des motifs ester dérivés du bisphénol A et de l'acide téréphtalique, isophtalique ou phtalique, ou d'une combinaison comprenant au moins un des diacides précédents, et des motifs carbonate dérivés du bisphénol A ;
de 0,1 à 0,7 % en poids d'un sel ignifuge ;
de 5 à 15 % en poids de fibres de verre ;
de 0 à 0,2 % en poids d'un agent anti-goutte ;
éventuellement, jusqu'à 10 % en poids d'une composition d'additifs,
dans laquelle la composition de polycarbonate comprend de 2 à 4 % de siloxane.
